# EUROPEAN PATENT SPECIFICATION

(11) **EP 2 040 567 B1**
(45) Date of publication and mention of the grant of the patent: **11.06.2014**
(21) Application number: 07747981.4
(22) Date of filing: 04.04.2007
(51) Int. Cl.: A23K 1/18, A23K 1/00

(54) **ZYGOMYCETES FOR FISH FEED**
ZYGOMYCETEN FÜR FISCHFUTTER
NOURRITURE POUR POISSONS À BASE DE ZYGOMYCÈTES

(30) Priority: 30.06.2006 SE 0601440
(43) Date of publication of application: 01.04.2009
(73) Proprietor: Edebo, Lars, 412 70 Göteborg (SE)
(72) Inventor: Edebo, Lars, 412 70 Göteborg (SE)
(74) Representative: Valea AB
(86) International application number: PCT/SE2007/000315
(87) International publication number: WO 2008/002231

(56) References cited:
- WO-A1-00/63344
- WO-A2-2004/103086
- WO-A2-2004/103086
- US-A- 4 062 732
- US-A- 4 062 732
- US-A- 5 733 539
- "Animal feed contg. high lipid-producing microbes - such as candida spp., lipomyces spp., rhodotorula spp., etc. to promote growth", 19890309, 9 March 1989 (1989-03-09), XP008101575, & JP 1 063343 A (ITOCHU SHIRYO) 9 March 1989 (1989-03-09)
- "Infection-preventive/therapeutic fish feed compsn. - contg. mould or its culture prod., used in food, fermentation, brewery", 19921019, 19 October 1992 (1992-10-19), XP008101574, & JP 4 293457 A (GUNZE KK) 19 October 1992 (1992-10-19)
- DATABASE WPI Derwent Publications Ltd., London, GB; AN 1992-394385, XP008101574 & JP 04 293457 A (GUNZE KK) 19 October 1992
- DATABASE WPI Derwent Publications Ltd., London, GB; AN 1989-118224, XP008101575 & JP 01 063343 A (ITO CHU SHIRYO KK) 09 March 1989

## Description

### TECHNICAL FIELD

The present invention relates to the use of non-viable zygomycetes whole-cell biomass as fish feed replacing the large quantities of fish meal presently used.

### BACKGROUND OF THE INVENTION

In the production of animal type protein for human food, fish is considered to be very cost efficient, since no energy is being consumed for the maintenance of body temperature. Furthermore fish is efficient in protein tum-over. There are also convincing medical data showing that fish is healthy food preventing arteriosclerosis and heart conditions and promoting the fetal development of the central nervous system.

However, fish feed presently contains large quantities of fish protein. For salmonids and other more palatable species often 3-6 times (w/w) as much captured fish are consumed in the rearing. The annual global production of fish meal from wild sources is 6-7,000,000 tons. As a consequence captured fish, which preferably should be consumed by humans directly, is used for rearing fish (and other animals). This is inefficient and contributes to the over-fishing of oceans and lack of fish as food, particularly in developing countries. Furthermore, non-degraded toxic chemicals such as PCB, dioxins, heavy metals (lead, mercury etc,) and methyl mercury accumulate along the aquaculture food chain.

The finfish aquaculture need of protein is expected to show an annual increase of 6% whereas the production of fish meal will decrease. Vegetable alternatives have been sought. However, soy protein is not suitable because it causes intestinal inflammation in salmonids.

Altogether, presently most of the salmonid aquaculture feed consists of ingredients which alternatively are used as human food.

In traditional biotechnology the aim has been to use an organism for producing one product of commercial value. This might be a substance with high biological activity and value such as an antibiotic or a hormone. The higher the value of the product the less is the importance of the cost of media and recovery of by-products. When the commercial value of the product is low, the economy of the process is improved by development of a system consisting of a low-cost substrate, a non-expensive production process and the use of several products from the process which are produced by the biosynthesis or remaining in the medium used for cultivation.

Microbial biomass has for long been considered to be a convenient source of protein (single cell protein, SCP) for rearing domestic animals and even man. However, microbes also contain high concentrations of nucleic acids containing purines which may end up as uric acid causing adverse effects mainly by precipitation in the kidney and the connective tissue (gout) in mammals and birds. Thus it has been desirable to use a protein purification step in the production process for feed which has raised the cost of production.

Fish is not so sensitive to high intake of nucleic acid due to its production of uricase. This enzyme participates in the decomposition of uric acid into urea which is extremely soluble, harmless and excreted. Thus even high concentrations of nucleic acids in microbial biomass for fish feed might not cause deleterious effects.

Fungi, both macroscopic and microscopic species have been tested as fish feed. Two lines of development have been pursued:
1. Living cells or cultures as probiotics, and
2. Extracted compounds or dead, non-purified biomass as pre-formed nutrients often in the role as essential growth factors.

### 1. Living cultures have been used as probiotic organisms often in order to prevent or treat infectious diseases of fishes.

JP4293457 (Kubo Tadamichi, Abe Shiro, Tanabe Nobukazu, Asano Koichi: Feed composition for preventing and treating infectious disease of fishes) describes the use of different groups of fungi belonging to ascomycetes *(Aspergillus, Penicillium)* as well as zygomycetes (*Rhizopus, Mucor, Rhizomucor*). The fungi are grown and dried alive for preservation. Then they are mixed into basic fish feed in small quantities. It is emphasized that the fungi are an active, living ingredient and a minor component of the feed.

JP3834763 B2 (Okabe Katsumi, Okabe Masako: Mixed feed) is showing a similar approach also using living cultures of the yeast *Hansenula* in combination with the filamentous fungi *Aspergillus, Rhizopus, and Mucor.* This feed is used for various kinds of domestic animals.

EP1314359 A1 (Koen Molly, Geert Bruggeman: Growth promoter composition for animals) - quoted by the preceding JP3834763 B2 - uses a combination of a living basidiomycetes fungus (mushroom) with at least one growth-promoting component selected from the group comprising organic acids, inorganic acids, animal feed antibiotics, conventional growth promoters, and plant extracts. The primary object is the improvement of the microbial ecosystem in the gastrointestinal tract. The feed causes detachment and excretion of pathogenic bacteria such as *Salmonella*, *Escherichia* etc. resulting in more healthy animals. Suppression of virus and protozoan pathogens in the gastrointestinal tract is also proposed. The growth promoter is supplied with living material as a minor proportion of the feed.

### 2. Extracted compounds and non-viable biomass as pharmaceuticals and food ingredients.

Fish is the main source of omega-3 polyunsaturated fatty acids (PUFA) in food for humans. Fishes are getting PUFA originating in plankton along the food chain. These observations have initiated investigation into alternative microbial sources. Single-celled marine-type micro-organisms of the order *Thraustochytriales* have shown high concentrations of omega-3 PUFA (US6977167, William R Barclay: Mixtures of omega-3 and omega-6 highly unsaturated fatty acids from euryhaline micro-organisms). Extracted lipids or whole-cell microbial product can be added to processed food as a nutritional supplement or to fish and animal feeds to enhance the omega-3 PUFA content of products from these animals. Extracted lipids can also be used in nutritional pharmaceutical and industrial applications. Release of lipids from the cells is facilitated by mechanical and enzymatic disintegration of the microbial cell walls.

A closely related patent (US6140365; Thomas Kiy, Ulrich Klein, Stefan Mullner, Dieter Wollbrandt: Preparation of microorganisms comprising omega-3 fatty acid for use as a prophylactic or therapeutic agent against parasitic diseases of animals) employs the use of a pharmacologically acceptable composition comprising omega-3 PUFA against parasitic diseases of animals, particularly avian coccidiosis. A wide variety of not closely related aquatic micro-organisms including micro-algae, *Thraustochytrium* and *Schizochytrium* (as preceding patent) and *Mortierella* (a zygomycete), as well as bacteria is used as source of omega-3 PUFA.

US6812009 (Raymond M Gladue, Paul W Behrens: DHA-containing nutritional compositions and methods for their production) emphasizes the importance of DHA (docosahexaenoic acid) and ARA (arachidonic acid) in aquaculture feeds. Particulate material suitable for feeding larvae is prepared from a wide variety of aquatic micro-organisms preferably from algal cells having a high content of DHA residues. Mechanical disintegration and extraction are used. Also yeasts, *Schizochytrium, Thraustochytrium,* and the zygomycete *Mortierella* are included like in US6140365 above.

US6638561 (Robert Franciscus Beudeker, Peter Coutteau: Microbial arachidonic acid (ARA) for use in marine feed) describes production of ARA by the zygomycetes *Mortierella, Phycomyces*, and *Blakeslea* as well as by the ascomycete *Aspergillus*. The lipid is obtained as a triglyceride and included into the feed free of microbial cells. US6251442 (Tomoya Aoyama, Yasuaki Sugimoto: Feed composition for broilers and method for breeding broilers) describes addition of coenzyme Q to a feed composition for broilers in order to prevent the broilers from heart insufficiency showing up as ascites and to raise productivity. It is well established that coenzyme Q can be extracted from zygomycetes such as *Mucor* and *Mortierella*, yeasts such as *Saccharomyces and Candida*, several genera of bacteria, tobacco leaves and other plant materials.

JP 1063343 discloses a feed that comprises dried lipd-producing microbes. WO 2004/103086 discloses uses of biomass residues for animal feed supplements. US 4062732 discloses a method of obtaining proteases from culturing fungi, useful for animal feeds. US 5733539 discloses a bait for fish from a fermented biomass.

In summary the referred contributions describe the supplementation of minor quantities of specific essential growth factors like vitamins and particularly omega-3 PUFA from microbial sources rather than supplying the bulk nutrients required as proteins, source of energy and main building blocks of the fish. Attention has not been paid to intestinal acceptability of larger quantities of whole-cell microbial biomass and digestion. Consequently they offer no replacement for the great quantities of captured fish required in increasing demand for fish rearing. The present invention aims at offering a main fish feed ingredient based on sources not used for human food. In this way fish from aquaculture as well as wild fish from the oceans may become greater sustainable contributors of health-promoting food.

One draw-back of zygomycetes lipids is that they contain unsaturated 18 carbon fatty acids rather than 20 carbon PUFA. However, freshwater fish as well as mammalians are capable of elongation of the hydrocarbon chain with establishment of double bonds which might make 18 carbon unsaturated fatty acids sufficient under certain conditions.

Investigations into using bacterial biomass produced on non-expensive media (methane, petrochemical waste) for fish feed have encountered obstacles, since the bacterial biomass has contained endotoxins and other toxins which have had adverse effects on the fish gut. Consequently microbial biomass innocuous to the fish gut is sought.

*Zygomycetes*, previously called *Phycomycetes* (algal fungi), is considered to be the most primitive group of fungi, originating in water about a billion years ago. Recent DNA-based phylogenetic studies have shown fungi to be more closely related to animals than to other microbes such as bacteria and microscopic plants. For hundreds of years zygomycetes have been widely used for preparation of food, particularly in South-East Asia. Tempe, which is a camembert-type of food prepared from soy using *Rhizopus* strains, is presently tested in order to improve the nutritional state of malnourished children in Indonesia. Thus, such zygomycetes strains isolated from tempe might be safe ingredients in fish feed.

The hyphae of zygomycetes are non-septate, and their cell walls consist mainly of chitosan. The cell walls may make up as much as 58% of the weight of the cell and chitosan, which is responsible for the shape and the high mechanical strength of the wall, may contribute to ca half of the weight of the cell wall (L Edebo & H Hjorth: Structure and properties of the cell wall skeleton of Rhizopus oryzae, 14 Congr. Internat. Soc. Human and Animal Mycology, Buenos Aires, 2000; H. Hjorth: The cell wall of Rhizopus oryzae: Structure, properties and applications, Thesis, Göteborg University, 2005).

Crustaceans make up a main component in the food for many finfish and shellfish and become digested in the fish intestinal tract. Their exoskeletons contain a large proportion of chitin/chitosan similar to the cell wall of certain zygomycetes, This indicates that the cell walls of certain zygomycetes hyphae might be accessible to enzymatic degradation by intestinal enzymes making the nutrients of the biomass available, both the protoplasmic and the cell wall components. Other fungi usually have more complicated cell walls with a smaller proportion of chitin/chitosan which might make them more irritating and resistant to digestion.

In the preparation process for paper pulp from wood in the sulphite process about half of the wood (dry weight) is liberated into the sulphite liquor as lignosulfonate 60%, sugars 20%, and other material 20%. The dominating sugars are mannose, xylose, galactose, and glucose. Xylose is a pentose, the others are hexoses. The hexoses are readily fermented by yeast, *Saccharomyces cerevisiae,* into ethanol, whereas the pentoses are not fermented unless the yeast is genetically modified. Xylose is particularly abundant in hardwood. Spent sulphite liquor (SSL) has got FDA approval as a binding agent in feed indicating its non-harmful properties at low concentrations and freedom from stable toxic chemicals which might accumulate in the body. Zygomycetes are efficient consumers of the sugars, hexoses as well as pentoses. However, toxic compounds such as furfural, hydroxymethylfurfural, and acetic acid are present in SSL and prevent the growth of zygomycetes at high concentrations. They may be consumed by the fungi provided special precautions are taken to promote the growth.

### SUMMARY OF THE INVENTION

The present invention is directed toward a microbial fish feed ingredient aiming to substitute for the enormous quantity of fish meal required for present-day fish rearing.

The microbial biomass consists of zygomycetes mycelium - preferably from terrestrial strains of the Mucoraceae family with established use in food - which has been cultivated in spent sulphite liquor from production of cellulosic materials. The biomass has a high concentration of proteins, unsaturated 18 carbon fatty acid compounds, and vitamins.

The whole-cell biomass is killed by heat and included into standard types of fish feed composition.

The fish feed comprises at least 5 % (w/w) dead zygomycetes whole-cell biomass as a major protein source which can be fully digested in the fish gut and enhances the specific growth rate over that of fish fed standard feed based on fish meal.

In another preferred embodiment of the invention the fish feed comprises at least 7.5 % (w/w), more preferably at least 10 % (w/w), more preferably at least 20 % (w/w), more preferably at least 30 % (w/w), more preferably at least 40 % (w/w), more preferably at least 50 % (w/w), more preferably at least 60 % (w/w), more preferably at least 70 % (w/w), more preferably at least 80 % (w/w), more preferably at least 90 % (w/w), most preferably at least 100 % (w/w) *zygomycetes* mycelium.

In another preferred embodiment of the invention the zygomycetes strain belongs to the family *Mucoraceae.*

In another preferred embodiment of the invention the zygomycetes strain belongs to the genus *Rhizopus.*

In another preferred embodiment of the invention the zygomycetes strain belongs to the species *Rhizopus oryzae*.

In another preferred embodiment of the invention the zygomycetes strain is isolated from human food.

In another preferred embodiment of the invention the zygomycetes strain *is Rhizopus oryzae zit 102*.

In another preferred embodiment of the invention the fish feed further comprises vitamins, trace elements, fat, and carbohydrates.

In yet another preferred embodiment of the invention the zygomycetes biomass has been cultivated on lignocellulosic media.

In another preferred embodiment of the invention the lignocellulosic medium is spent sulphite liquor from the paper pulp preparation process.

In another preferred embodiment of the invention the lignocellulosic medium is supplied with oil as an anti-foaming agent.

In another preferred embodiment of the invention the oil is made up of triacylglycerols containing 18 carbon atoms unsaturated fatty acids.

In another preferred embodiment of the invention the triacylglycerol is soy oil.

In another preferred embodiment of the invention the mycelium is harvested by sieve and washed with water after cultivation.

In another preferred embodiment of the invention the mycelium after cultivation is harvested by sieve and compressed to remove most of the lignocellulosic cultivation medium and the remaining lignin compounds are used as binders in the feed.

In another preferred embodiment of the invention the chitosan present in the zygomycetes is extracted with hot dilute sulphuric acid and the insoluble portion used for fish feed.

In another preferred embodiment of the invention the extraction is performed with 1% sulphuric acid at 121°C for 20 min.

In another preferred embodiment of the invention the zygomycetes biomass is killed by heat.

In another preferred embodiment of the invention the zygomycetes biomass is killed by autoclaving at ca 120°C for 30 min.

In another preferred embodiment of the invention the zygomycetes biomass is mechanically disintegrated.

In another preferred embodiment of the invention the zygomycetes biomass is disintegrated by freeze-pressing.

In another preferred embodiment of the invention the fish feed is used for the rearing of fish.

In another preferred embodiment of the invention the fish feed is used for the rearing of finfish.

In another preferred embodiment of the invention the fish feed is used for the rearing of freshwater finish.

In another preferred embodiment of the invention the fish feed is used for the rearing of shellfish.

When zygomycetes-containing feed was fed to rainbow trout it was unexpectedly found that not only did the fishes eat the new food well but also their weight gain per day exceeded that of fish fed the standard feed based on fish meal.

It was furthermore concluded that the fungal hyphae were fully digested in the intestinal tract of the rain-bow trout, since hyphal elements were seen in the upper and middle portion but not in the lower portion of the intestinal tract.

Use of dead, heat-coagulated microbial material make use of the microbial cell wall as a package for nutrients which otherwise would tend to be dissolved in the aquatic medium. It also eliminates the risk of deleterious effects caused by living organisms in new, non-contained environments.

### DETAILED DESCRIPTION OF PREFERRED EMBODIMENTS

### Cultivation of zygomycetes

Spent sulphite liquor (SSL) as well as SSL recovered after ethanol fermentation with the baker's yeast *Saccharomyces cerevisiae* (SSLex) were used for air-lift cultivation of a zygomycetes strain (*zit 102*) isolated from Indonesian tempe (Millati, Edebo, Taherzadeh, Enzyme & Microbial Technol. 36: 294-300, 2005).

The strain was tentatively identified as *Rhizopus oryzae* although it showed some branching of sporangiophores and was capable of growing at 50°C which are non-typical properties of this species.

Before inoculation of SSL or SSLex and dilutions of them with *R. oryzae*, these liquids were supplemented with ammonia and ammonium phosphate in order to adjust the pH (pH 5-6.3) and to provide extra sources of nitrogen and phosphate. The liquids were used for cultivation at 25-100% concentrations.

Cultivation of *zit 102* was performed in volumes of 60-70 litres in an air-lift fermentor at 36-38°C. The outer tube of the fermentor was a glass tube with an inner diameter of 23 cm. The inner tube was a stainless steel tube (inner diameter of about 16 cm). Air was introduced into the lower end of the inner tube via a sintered sparger. As far as possible the process was performed under aseptic conditions. Foam was controlled with a mechanical foam breaker, and triacylglycerols containing 18 carbon atoms unsaturated fatty acids.

Growth appeared as spherical pellets, diameters about 3 mm. With intervals of 7-14 hours ca 80% of the culture volume was harvested by passing through an ordinary household sieve which retained the mycelium biomass. The mycelium was washed free of SSL by rinsing with tap water. The biomass was either frozen or freeze-dried until further used.

The culture volume removed was replaced with fresh SSL and the cultivation process repeated.

The yield of biomass was 2-8 g/L medium. The recovery was 0.4-0.75 g mycelium per g of sugar, indicating that not only sugars were consumed by the *zygomycetes*.

After harvest the biomass was autoclaved at 120°C for 30 min to kill the organisms and to facilitate penetration of the cell envelope.

In a parallel procedure aimed at increasing the nutrient value of the biomass and reducing possible side-effects by chitosan or the rigid cell wall, the biomass was suspended in dilute (0.5-2%) sulphuric acid and autoclaved at 121°C for 20 min which extracted the chitosan. The liquid was separated from the remaining biomass by hot filtration (temperature higher than 90°C). Chitosan precipitated from the liquid when the temperature was reduced below room temperature and was recovered for other uses.

### Chemical analysis of zygomycetes mycelium

The concentration of protein was 45% of the dry weight of the mycelium.

Further analysis with an amino acid analyser (Biochrom Ltd, Cambridge, UK) showed (g amino acid/kg mycelium): cysteine 3.66, methionine 8.23, aspartic acid 31.42, threonine 14.54, serine 14.53, glutamic acid 36.92, proline 12.66, glycine 15.44, alanine 23.32, valine 18.36, isoleucine 19.02, leucine 25.14, tyrosine 35.22, phenylalanine 15.09, histidine 7.38, lysine 23.89, arginine 18.75. Separate analysis of tryptophan showed 4.80 g/kg mycelium.

Fat was analysed in five different batches cultivated on different types of sulphite liquor (calcium, magnesium, sodium) showing 10-20% (w/w). Their proportions of unsaturated 18 carbon fatty acids were 70-80%.

This composition has high nutritious value. No significant difference with respect to composition was seen between fresh and autoclaved mycelium.

### Feeding of young rainbow trout with fish feed containing zygomycetes mycelium

Groups of 10 young rainbow trout were offered feed containing 15 - 30% (dry wt) autoclaved zygomycetes mycelium in parallel to the standard feed based on fish meal (fish meal 53 dry wt %, dextrins as cooked wheat and oats 28, fish oil 15, vitamins and minerals 9%; *i.e.* 16.7-33.4% of the fish meal was replaced by zygomycetes biomass). The zygomycetes biomass replaced fish meal and dextrins on isoproteic basis such that 100 g of zygomycetes biomass replaced 59 g fish meal and 41 g dextrins. The fishes ate the zygomycetes-containing feed well right from the start with 15-19% increased feed intake (palatability) and showed satisfactory gain of weight. When the specific growth rate was calculated (SGR, %/day) it was 3.4 - 22% higher for the groups of fishes eating zygomycetes than for those eating the standard feed.

## Claims

1. A fish feed **characterized in that** it comprises biomass from a species of zygomycetes, wherein the zygomycetes biomass is provided as dead whole-cell biomass, said fish feed comprising at least 5% (w/w) whole-cell biomass in the total dry-weight of the feed.

2. The fish feed according to claim 1, **characterized in that** the zygomycetes biomass has been grown in the shape of pellets.

3. The fish feed according to claims 1-2, **characterized in that** it comprises at least 7,5 % (w/w), more preferably at least 10 % (w/w), more preferably at least 20 % (w/w), more preferably at least 30 % (w/w), more preferably at least 40 % (w/w), more preferably at least 50 % (w/w), more preferably at least 60 % (w/w), more preferably at least 70 % (w/w), more preferably at least 80 % (w/w), more preferably at least 90 % (w/w), most preferably 100 % (w/w) zygomycetes biomass.

4. The fish feed according to any one of claims 1-3, **characterized in that** the zygomycetes strain is belonging to the family *Mucoraceae.*

5. The fish feed according to any one of claims 1-4, **characterized in that** the zygomycetes strain is belonging to the genus *Rhizopus.*

6. The fish feed according to any one of claims 1-5, **characterized in that** the zygomycetes strain is belonging to the species *Rhizopus oryzae*.

7. The fish feed according to any one of claims 1-6, **characterized in that** the zygomycetes strain is isolated from human food.

8. The fish feed according to any one of claims 1-7, **characterized in that** the zygomycetes strain *is Rhizopus oryzae zit 102*.

9. The fish feed according to any one of claims 1-8, **characterized in that** the zygomycetes biomass has been cultivated on lignocellulosic media.

10. The fish feed according to claim 9, **characterized in that** the lignocellulosic medium is spent sulphite liquor from the paper pulp preparation process.

11. The fish feed according to claim 10, **characterized in that** the spent sulfite liquor is retained in the zygomycetes biomass for use as a binding agent in the fish feed.

12. The fish feed according to claims 1-8, **characterized in that** chitosan present in the zygomycetes is extracted with hot dilute sulphuric acid and the insoluble portion used for fish feed.

13. A use of the fish feed claimed in any one of claims 1-12 for the rearing of finfish and shellfish.

14. A use of dead zygomycetes biomass as a substitute for fish meal in fish feed wherein the zygomycetes whole-cell biomass constitutes at least 5 % (w/w) of the fish feed, more preferably at least at least 7.5 % (w/w), more preferably at least 10 % (w/w), more preferably at least 20 % (w/w), more preferably at least 30 % (w/w), more preferably at least 40 % (w/w), more preferably at least 50 % (w/w), more preferably at least 60 % (w/w), more preferably at least 70 % (w/w), more preferably at least 80 % (w/w), more preferably at least 90 % (w/w), most preferably 100 % (w/w) of the fish feed.

15. The use according to claim 14, **characterized in that** the zygomycetes biomass has been grown in the shape of pellets.

## Patentansprüche

1. Fischfutter, **dadurch gekennzeichnet, dass** es Biomasse aus einer Zygomyceten-Spezies umfasst, wobei die Zygomyceten-Biomasse als tote Ganzzellen-Biomasse bereitgestellt wird, wobei das Fischfutter wenigstens 5% (G/G) Ganzzellen-Biomasse im gesamten Trockengewicht des Futters umfasst.

2. Fischfutter nach Anspruch 1, **dadurch gekennzeichnet, dass** die Zygomyceten-Biomasse in der Form von Pellets wachsen gelassen wurde.

3. Fischfutter nach Ansprüchen 1-2, **dadurch gekennzeichnet, dass** es wenigstens 7,5% (G/G), bevorzugt wenigstens 10% (G/G), bevorzugter wenigstens 20% (G/G), bevorzugter wenigstens 30% (G/G), bevorzugter wenigstens 40% (G/G), bevorzugter wenigstens 50% (G/G), bevorzugter wenigstens 60% (G/G), bevorzugter wenigstens 70% (G/G), bevorzugter wenigstens 80% (G/G), bevorzugter wenigstens 90% (G/G), äußerst bevorzugt 100% (G/G) Zygomyceten-Biomasse umfasst.

4. Fischfutter nach einem der Ansprüche 1-3, **dadurch gekennzeichnet, dass** der Zygomyceten-Stamm zu der Familie *Mucoraceae* gehört.

5. Fischfutter nach einem der Ansprüche 1-4, **dadurch gekennzeichnet, dass** der Zygomyceten-Stamm zu der Gattung *Rhizopus* gehört.

6. Fischfutter nach einem der Ansprüche 1-5, **dadurch gekennzeichnet, dass** der Zygomyceten-Stamm zu der Spezies *Rhizopus oryzae* gehört.

7. Fischfutter nach einem der Ansprüche 1-6, **dadurch gekennzeichnet, dass** der Zygomyceten-Stamm aus menschlichem Nahrungsmittel isoliert ist.

8. Fischfutter nach einem der Ansprüche 1-7, **dadurch gekennzeichnet, dass** der Zygomyceten-Stamm *Rhizopus oryzae zit 102* ist.

9. Fischfutter nach einem der Ansprüche 1-8, **dadurch gekennzeichnet, dass** die Zygomyceten-Biomasse an Lignocellulose-Medium kultiviert wurde.

10. Fischfutter nach Anspruch 9, **dadurch gekennzeichnet, dass** das Lignocellulose-Medium verbrauchte Sulfitablauge aus dem Papierzellstoffherstellungsverfahren ist.

11. Fischfutter nach Anspruch 10, **dadurch gekennzeichnet, dass** die verbrauchte Sulfitablauge in der Zygomyceten-Biomasse zur Verwendung als Bindemittel in dem Fischfutter zurückgehalten wird.

12. Fischfutter nach den Ansprüchen 1-8, **dadurch gekennzeichnet, dass** Chitosan, das in den Zygomyceten vorliegt, mit heißer verdünnter Schwefelsäure extrahiert wird und der unlösliche Teil für Fischfutter verwendet wird.

13. Verwendung des Fischfutters nach einem der Ansprüche 1-12 für die Aufzucht von Flossen Fische und Schalentier.

14. Verwendung von toter Zygomyceten-Biomasse als Ersatz für Fischmehl in Fischfutter, wobei die Zygomyceten-Ganzzellen-Biomasse wenigstens 5% (G/G) des Fischfutters, bevorzugter wenigstens 7,5% (G/G), bevorzugter wenigstens 10% (G/G), bevorzugter wenigstens 20% (G/G), bevorzugter wenigstens 30% (G/G), bevorzugter wenigstens 40% (G/G), bevorzugter wenigstens 50% (G/G), bevorzugter wenigstens 60% (G/G), bevorzugter wenigstens 70% (G/G), bevorzugter wenigstens 80% (G/G), bevorzugter wenigstens 90% (G/G), äußerst bevorzugt 100% (G/G) des Fischfutters bildet.

15. Verwendung nach Anspruch 14, **dadurch gekennzeichnet, dass** die Zygomyceten-Biomasse in der Form von Pellets wachsen gelassen wurde.

## Revendications

1. Aliment pour poissons, **caractérisé en ce qu'**il comprend une biomasse issue d'une espèce de zygomycètes, laquelle biomasse de zygomycètes se trouve à l'état de biomasse de cellules entières mortes, et lequel aliment pour poissons comprend, dans son poids total à sec, au moins 5 % en poids de biomasse de cellules entières.

2. Aliment pour poissons, conforme à la revendication 1, **caractérisé en ce que** la biomasse de zygomycètes a pris, lors de sa culture, la forme de pastilles.

3. Aliment pour poissons, conforme à la revendication 1 ou 2, **caractérisé en ce qu'**il comprend au moins 7,5 % en poids, mieux encore au moins 10 % en poids, mieux encore au moins 20 % en poids, mieux encore au moins 30 % en poids, mieux encore au moins 40 % en poids, mieux encore au moins 50 % en poids, mieux encore au moins 60 % en poids, mieux encore au moins 70 % en poids, mieux encore au moins 80 % en poids, mieux encore au moins 90 % en poids, et au mieux 100 % en poids, de biomasse de zygomycètes.

4. Aliment pour poissons, conforme à l'une des revendications 1 à 3, **caractérisé en ce que** la souche de zygomycètes appartient à la famille des mucoracées.

5. Aliment pour poissons, conforme à l'une des revendications 1 à 4, **caractérisé en ce que** la souche de zygomycètes appartient au genre *Rhizopus.*

6. Aliment pour poissons, conforme à l'une des revendications 1 à 5, **caractérisé en ce que** la souche de zygomycètes appartient à l'espèce *Rhizopus oryzae*.

7. Aliment pour poissons, conforme à l'une des revendications 1 à 6, **caractérisé en ce que** la souche de zygomycètes a été isolée à partir de nourriture humaine.

8. Aliment pour poissons, conforme à l'une des revendications 1 à 7, **caractérisé en ce que** la souche de zygomycètes est *Rhizopus oryzae zit 102*.

9. Aliment pour poissons, conforme à l'une des revendications 1 à 8, **caractérisé en ce que** la biomasse de zygomycètes a été obtenue par culture sur un milieu lignocellulosique.

10. Aliment pour poissons, conforme à la revendication 9, **caractérisé en ce que** le milieu lignocellulosique est une lessive au bisulfite résiduaire, issue d'un procédé de production de pâte à papier.

11. Aliment pour poissons, conforme à la revendication 10, **caractérisé en ce que** la lessive au bisulfite résiduaire est retenue dans la biomasse de zygomycètes pour servir de liant dans l'aliment pour poissons.

12. Aliment pour poissons, conforme à l'une des revendications 1 à 8, **caractérisé en ce que** le chitosane présent dans les zygomycètes est extrait à l'aide d'acide sulfurique dilué chaud, et la partie insoluble est utilisée pour l'aliment pour poissons.

13. Utilisation d'un aliment pour poissons conforme à l'une des revendications 1 à 12 dans l'élevage de poissons, de coquillages ou de crustacés.

14. Utilisation d'une biomasse de zygomycètes morts en remplacement d'une farine de poisson dans un aliment pour poissons, dans laquelle la biomasse de cellules entières de zygomycètes représente au moins 5 % en poids, mieux encore au moins 7,5 % en poids, mieux encore au moins 10 % en poids, mieux encore au moins 20 % en poids, mieux encore au moins 30 % en poids, mieux encore au moins 40 % en poids, mieux encore au moins 50 % en poids, mieux encore au moins 60 % en poids, mieux encore au moins 70 % en poids, mieux encore au moins 80 % en poids, mieux encore au moins 90 % en poids, et au mieux 100 % en poids, de l'aliment pour poissons.

15. Utilisation conforme à la revendication 14, **caractérisée en ce que** la biomasse de zygomycètes a pris, lors de sa culture, la forme de pastilles.
